# EUROPEAN PATENT SPECIFICATION

(11) **EP 3 221 860 B1**
(45) Date of publication and mention of the grant of the patent: **26.12.2018**
(21) Application number: 15800927.4
(22) Date of filing: 20.11.2015
(51) Int. Cl.: G09F 15/00

(54) **BASE AND BODY ASSEMBLY**
ANORDNUNG AUS SOCKEL UND KÖRPER
ENSEMBLE DE SOCLE ET DE CORPS

(30) Priority: 21.11.2014 GB 201420750
(43) Date of publication of application: 27.09.2017
(73) Proprietor: Glasdon (UK) Limited, Blackpool Lancashire FY4 4WA (GB)
(72) Inventor: THORNTON GAZE, Henry, Preston PR1 0AX (GB)
(74) Representative: Pinnington, Giles Oliver
(86) International application number: PCT/GB2015/053552
(87) International publication number: WO 2016/079541

(56) References cited:
- EP-A2- 2 767 971
- US-A- 5 860 386
- US-A1- 2007 241 255
- US-A1- 2010 281 791

## Description

The present invention relates to a base and body assembly and more particularly, but not exclusively, to such an assembly in which the body is in the form of a frame for a sign, or a waste receptacle.
It is known to attach a body member, such as a frame for a sign, or a waste receptacle, to a base member by inserting a connecting section of the body member into a receiving section of the base member and using fixtures, such as nuts and bolts, to attach the connection section to the receiving section, so as to attach the body member to the base member.
However, the fixing in place of such fixtures requires specialist tools, and since the connecting sections and receiving sections are typically at least partially enclosed by the body and base members, it can be difficult to apply the tools to the fixtures. This can make the attachment of the body member to the base member difficult and time consuming.
In addition, due to manufacturing tolerances, variations in the dimensions of the receiving and connecting sections can result in the body member being able to move relative to the base member, when it is attached to the base member by the fixtures, for example being able to rattle around in the base Document EP2767971A is considered the closest prior art.
It is one object of the present invention to obviate or mitigate the aforesaid disadvantages. It is also an object of the present invention to provide for an improved or alternative base and body assembly.
According to a first aspect of the present invention there is provided a base and body assembly comprising a base member, a body member and a locking member;
one of the base member or the body member having a connecting section defining a locking bore, for receiving the locking member, the bore having a longitudinal axis extending in an axial direction, and the other of the base member or the body member having a receiving section defining a volume for receiving the connecting section;
wherein when the connecting section is received by the receiving section, the locking member is movable along the locking bore to an attachment position in which first and second ends of the locking member are disposed on opposite axial sides of the locking bore to form a locking abutment with the other of the base member and body member to substantially prevent the connecting section being removed from the receiving section;
the base and/or body member having a first engagement surface and the locking member having a second engagement surface arranged such that when the locking member is received within the locking bore and travels along the locking bore towards the attachment position, the first and second engagement surfaces engage with each other such that at least part of the locking member is moved in a first direction inclined relative to the axial direction;
and wherein a biasing member is coupled to the locking member such that the movement of the at least part of the locking member in the first direction causes the biasing member to urge at least a part of the locking member in a second direction against said other of the base member and body member.

This is advantageous in that, due to the force exerted by the biasing member, the body member and base member may be held together securely when the locking member is in the attachment position. This may prevent the body from moving relative to the base (e.g. rattling in the base), due to variations in dimensions due to manufacturing tolerances, for example.

In addition, the locking member may be automatically moved to the attachment position, by the biasing member, as it travels along the locking bore. This advantageously allows the locking member to be moved to the attachment position simply by pushing the locking member through the locking bore, thereby providing a simple assembly process and removes the need for any tooling to be applied to the locking member.

Optionally when the locking member is received within the locking bore and travels along the locking bore to the attachment position, the first and second engagement surfaces engage with each other such that at least part of the locking member is moved in said first direction.

Optionally the biasing member is coupled to the locking member such that when it is in the attachment position, the biasing member urges the locking member in the second direction against the other of the base member and body member.

This advantageously results in a secure attachment of the body member to the base member.

Optionally when the locking member is in the attachment position, the biasing member urges first and second ends of the locking member against respective first and second surfaces of the receiving section, disposed on opposite axial sides of locking bore.

Optionally the base member and/or the body member comprises a locking formation arranged such that as an end of the locking member passes the locking formation, the urging of the locking member in the second direction moves the locking member into the attachment position, in which the locking formation limits movement of the locking member in a said axial direction such that the locking member cannot be removed from the locking bore by movement of the locking member in said axial direction. Preferably the other of the base member and the body member comprises the locking formation.

This is advantageous in that the locking member may be automatically moved by the biasing member, as it travels along the locking bore, to the attachment position, and when in the attachment position, the locking member is axially retained (at least in one direction) in the locking bore.

The locking formation and the first engagement surface may be disposed on opposite axial sides of the locking bore, when the connecting section is received by the receiving section.

The first direction may be inclined at an oblique angle relative to the axial direction. When the at least part of the locking member is moved in the first direction, it may move along an axis in the first direction that passes through the longitudinal axis of the locking bore.

The first engagement surface and/or the second engagement surface may extend in the first direction.

The first and/or second engagement surface may be straight, part-curved or substantially curved along its length in said first direction.

The first engagement surface may be disposed in the path of the locking member, as the locking member passes through the locking bore.

Preferably said other of the base member and the body member comprises the first engagement surface.
The first engagement surface may be formed on the same axial side as an end of the locking bore through which an end of the locking member passes as it moves to the attachment position.

Optionally, where one of the first and second engagement surfaces extends in the first direction, the other of the first and second engagement surfaces does not extend in the first direction.

The base member and/or body member that comprises the locking formation may define a recess adjacent to the locking formation, within which the end of the locking member is received when the locking member is in the attachment position.

Optionally the locking formation forms a first locking formation and the base member and/or body member comprises a second locking formation, wherein when the locking member is in the attachment position, the first and second locking formations limit movement of the locking member in first and second said axial directions such that the locking member cannot be removed from the locking bore by movement of the locking member in said first and second axial directions.

The first and second locking formations may be disposed on opposite axial sides of the locking bore, when the connecting section is received by the receiving section.

The biasing member may be indirectly coupled to the locking member. In this case, optionally the locking bore is dimensioned such that when the locking member is received within the locking bore, movement of the locking member in the first and second directions moves the one of the base member and body member, that has the connecting section that defines the bore, in the first and second directions respectively, and vice-versa, and wherein the biasing member contacts said one of the base member and the body member when it is moved in the first direction to urge it in the second direction.

It will be appreciated that, in this case, the urging of the one of the base member and body member in the second direction urges the locking member in the second direction, against the other of the base member and body member.

Alternatively, the biasing member may be directly coupled to the locking member, for example by being directly attached to the locking member.

The biasing member may comprise a resiliently deformable member. The biasing member may be a thermoplastic moulding. The biasing member may be resiliently deformable by virtue of being a thermoplastic moulding.

The resiliently deformable member may be elastically deformable.

The biasing member may comprise a block of resiliently deformable material. The biasing member may be made of a resiliently deformable material, including a suitable elastomeric material, for example a thermoplastic elastomer, polyurethane or rubber.

The biasing member may be formed by one of the base member and the body member, wherein the other of the base member and body member (that doesn't form the biasing member) is arranged to deform the biasing member as the locking member is moved to its attachment position, thereby producing a force on the locking member that urges it in the second direction.

Optionally a surface of one of the base member and body member defines a volume for receiving a section of the other, as the locking member is moved in the first direction, wherein one of the base member and body member that defines the volume, or the section of the other, is resiliently deformable to form the biasing member, such that when the locking member is moved in the first direction, a surface of said section is forced against the surface that defines the volume, thereby deforming the biasing member to produce a force on the locking member that urges it in the second direction.

This advantageously results in a secure attachment of the body member to the base member.

Optionally the surface that defines the volume and said section are dimensioned so that they form an interference fit as said section is received within the volume.

Optionally said section has a dimension that has a maximum value that is more than the maximum value of a corresponding dimension of said volume. The dimension may be a width, diameter, or length, for example.

The volume defined by the surface of the one of the base member and body member may decrease in a dimension (e.g. a width, diameter, or length) from a first end, that first receives said section, to a second end. The corresponding dimension of said section may decrease towards an end of the section that is first received within said volume.

The volume and said section may be elongate, extending along a longitudinal axis.

One of the surface that defines the volume and a surface of said section may be uneven, preferably undulating.

The surface of the one of the base member and body member that defines the volume, or the section of the other, that doesn't form the biasing member may be made of a material that is more rigid than the resiliently deformable material.

It will be appreciated that the biasing member may form part of the same base member or body member that has the connection section, or may form part of the same base member or body member that has the receiving section.

Alternatively, or additionally, the first and/or second engagement surface may be resiliently deformable, so as to form the biasing member. Preferably the first engagement surface is resiliently deformable, so as to form the biasing member. In this case, the first engagement surface may be arranged to urge a second end of the locking member in the first direction, thereby pivoting a first end of the locking member in the second direction, against the other of the base member and body member, as the locking member is moved to its attachment position.

Alternatively, or additionally, a surface of the connecting section that defines the locking bore may be resiliently deformable, so as to form the biasing member.

Alternatively, or additionally, the biasing member may be a spring, including a coiled spring or leaf spring.

The locking member may be an elongate member that extends along a longitudinal axis. The locking member may have a substantially circular cross-sectional shape about its longitudinal axis, such that the locking member is a generally cylindrical. The locking member may have any other suitable cross-sectional shape about its longitudinal axis, including a quadrilateral shape, a triangular shape, an oval shape, etc.

The locking bore may have a cross-sectional shape, about its longitudinal axis, that corresponds to that of the locking member. The size and shape of the locking bore may be so as to form a close radial fit with the locking member.

Preferably the body member comprises the connecting section and the base member comprises the receiving section.

Preferably the base member comprises the first engagement surface.

Preferably the base member comprises the locking formation.
Preferably the base member comprises the first and second locking formations.

The connecting section may be a leg of the base member or body member.

The volume defined by the receiving section may be an aperture, channel, bore or slot, for example.

The volume defined by the receiving section may be for receiving the connecting section along a receiving axis, wherein the axial direction of the locking bore is inclined relative to the receiving axis. The axial direction of the locking bore may be substantially perpendicular to the receiving axis.

Optionally the base member or body member defines a recess that is coaxial with the axis of the locking bore and is positioned to allow the locking member to be inserted into the locking bore, through the recess. Preferably the other of the base member and body member comprises said recess.

The second direction may be substantially perpendicular to the axial direction. Alternatively, the second direction may be at an oblique angle relative to the axial direction.

Optionally the connecting section, receiving section, first engagement surface, locking member and biasing member form a first locking assembly and the base and body assembly comprises a plurality of said locking assemblies.

Where the base and body assembly comprises said locking formation, each locking assembly may comprise a said locking formation. Where the base and body assembly comprises said first and second locking formations, each locking assembly may comprise a said first and second locking formation.

The base and body assembly may comprise first and second said locking assemblies, wherein the first and second locking assembles are spaced apart. The first and second locking assemblies may be spaced in a length or width direction of the base and body assembly.

The volume defined by the surface of the one of the base member and body member, and said section, may be elongate, extending between the first and second locking assemblies. The volume and section may extend part-way, or substantially across the distance between, the first and second locking assemblies.

The body member may be a frame, for example a frame for housing a sign.

The body member may form a part of a body of a waste receptacle, such as a bin.

The base member may be weighted and have a footprint such that it holds the body member in an upwardly extending position, when the connecting section is received by the receiving section, without the need for the base member to be fixed to a support surface. The upwardly extending position may be a substantially vertical position, or a position inclined relative to the vertical position.

The base member may be substantially hollow and filled with a material, for example sand or water.

According to a second aspect of the invention there is provided a base and body assembly according to the first aspect of the invention, wherein the connecting section is received by the receiving section and the locking member is in the attachment position.

According to a third aspect of the invention there is provided a method of assembling a base and body assembly, comprising providing a base and body assembly according to the first aspect of the invention, receiving the connecting section in the receiving section, receiving the locking member in the locking bore and moving the locking member to the attachment position.

Any of the features of any of the above aspects of the invention may be combined with any other feature of any of the other above aspects of the invention, in any combination.

A specific embodiment of the present invention will now be described, by way of example only, with reference to the accompany drawings, in which:
Figure 1 shows a front elevational view of a base and body assembly according to an embodiment of the present invention, where connecting sections of the body member are received by receiving sections of the base member, of the assembly;
Figure 2 shows a view corresponding to that of Figure 1, but where the body member and base member are shown separated from each other;
Figure 3 shows an axial cross-sectional view of the base member, and a lower portion of the body member, taken along the line XX in Figure 1, where a locking member of the assembly is omitted for illustrative purposes;
Figures 4 to 7 each show an axial portion of the view shown in Figure 3, and together sequentially show the steps of receiving a locking member in a locking bore and moving the locking member along the locking bore to an attachment position;

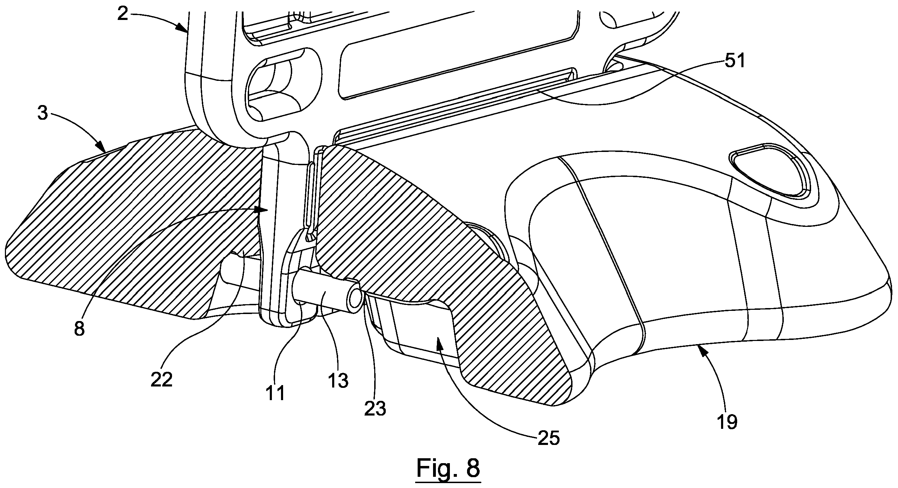

Figure 8 shows a cutaway side perspective view of the body and base assembly of Figure 1, where the locking member is in the attached position;

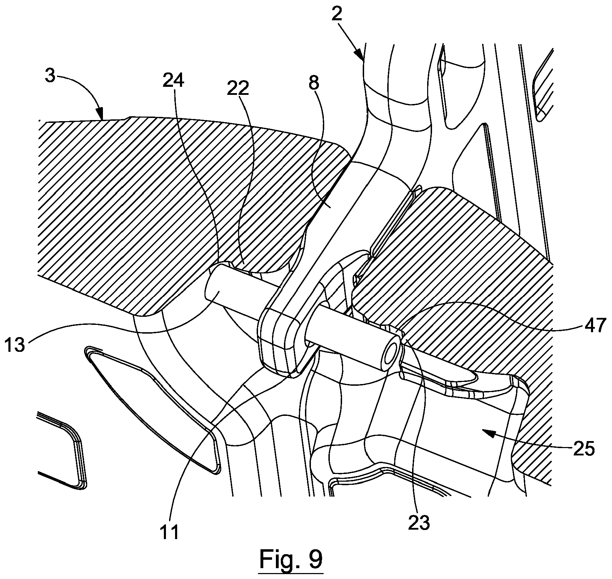

Figure 9 shows a view corresponding to that of Figure 8, but from a slightly lower angle;

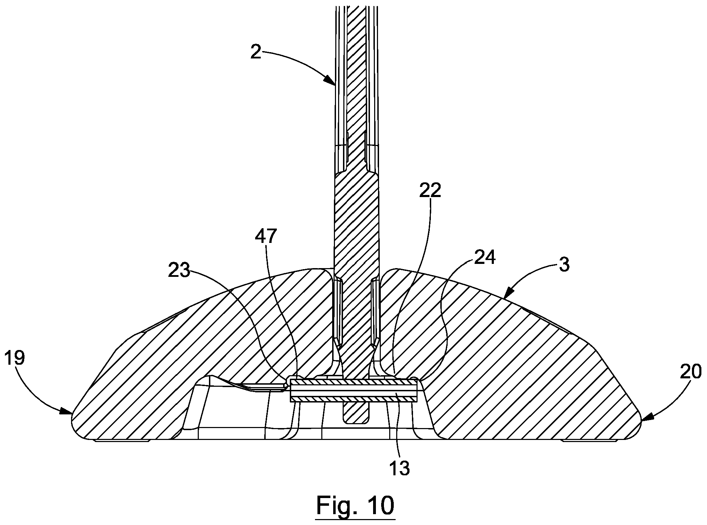

Figure 10 shows a view corresponding to that of Figure 8, but where the view is a side elevational view taken in the opposite direction;
Figures 11 and 12 each show a cross-sectional view of a lower portion of the base and body assembly of Figure 1, taken along the line Y-Y in Figure 2 (when the base and body members are in the position shown in Figure 1), and together sequentially show a biasing member, of the body member, being received in a channel defined by the base member;
Figure 13 shows an under plan view of the base and body assembly of Figure 1.

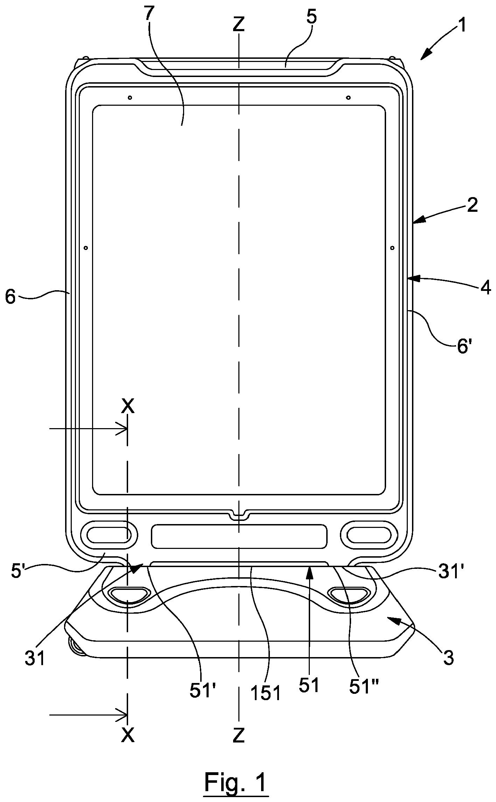

Referring to Figures 1 to 3, there is shown a base and body assembly 1 according to an embodiment of the present invention. The base and body assembly 1 comprises a body member 2 and a base member 3. As will be described in more detail below, the body member 2 is releasably attachable to the base member 3.

In this embodiment, the body member 2 is frame for housing a display, for example a sign or poster. In this regard, the body member 2 comprises a generally rectangular frame 4 that comprises first and second frame members 5, 5' that extend in a length direction of the assembly 1 and are joined at opposed ends by first and second side members 6, 6'.

The frame 4 bounds an internal volume 7 for receiving and retaining the display.

The base and body assembly 1 is substantially symmetrical about a plane Z that bisects the length of the assembly 1 (and is located substantially mid-way along the length of the assembly 1) and is substantially perpendicular to the length direction of the assembly 1.

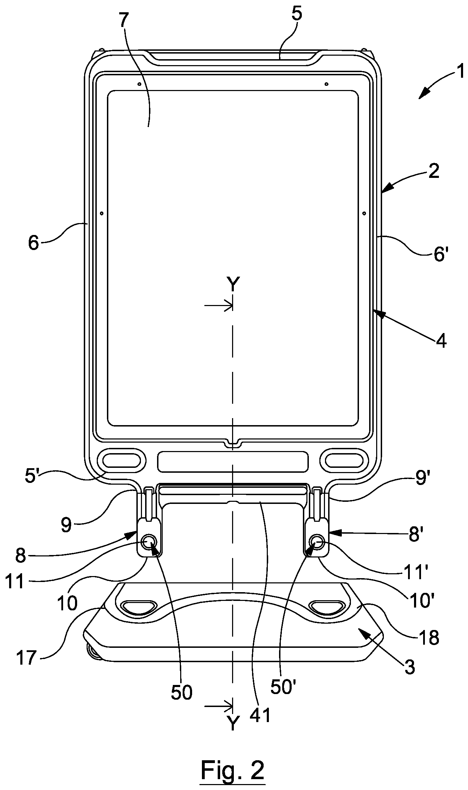

As shown in Figure 2, the body member 2 comprises first and second connecting sections in the form of first and second legs 8, 8' that are spaced apart in the length direction of the base and body assembly 1. The legs 8, 8' are each spaced substantially the same distance from said plane Z.

Each leg 8, 8' extends from a surface of the second frame member 5' that is proximal the base member 3. Each leg 8, 8' is substantially the same and comprises a generally solid body that is elongate and extends along a longitudinal axis from a first end, 9, 9', disposed at said surface of the second frame member 5', along a longitudinal axis, to a second end 10, 10'. The longitudinal axis of each leg 8, 8' is substantially perpendicular to a longitudinal axis of the second frame member 5'.

Each leg 8, 8' is receivable within a receiving section of the base member 3, in the form of an elongate slot 51 provided in the base member 3, as described in more detail below.

In the described embodiment, when the body member 2 is attached to the base member 3, the first and second frame members 5, 5' are oriented such that they form upper and lower frame members respectively, that are each substantially horizontal. In addition, the first and second side frame members 6, 6' are substantially vertical and the legs 8, 8' are substantially vertical. However, it will be appreciated that orientation and shape of the frame 4 and legs 8, 8' may vary to that shown in Figure 1.

Towards its second end 10, 10', each leg is provided with a locking bore, 11, 11' defined by an inner surface 50, 50' of the leg 8, 8'.

Each bore 11, 11' extends a longitudinal axis that is substantially perpendicular to the longitudinal axis of the leg 8, 8' and is substantially perpendicular to the length direction of the body member 2. Each bore 11, 11' has a substantially circular cross-sectional shape centred on the longitudinal axis 12, 12' of the bore 11, 11'.

Each bore 11, 11' extends throughout the thickness of the leg 8, 8' such that it is open at either end of the bore 11, 11'. Each bore 11, 11' is for receiving a locking member in the form of a locking pin 13, 13'. Each bore 11, 11' is sized so as to form a close radial fit with the respective locking pin 13, 13', when the locking pin 13, 13' is received within the bore 11, 11'.

Each locking pin 13, 13' is substantially identical. Each locking pin 13, 13' is a substantially cylindrical elongate pin that extends along a longitudinal axis 14, 14' from a first end 15 to a second end 16. Each pin 13, 13' forms a substantially hollow cylinder. However, it will be appreciated that each pin 13, 13' may be substantially solid and does not need to be hollow.

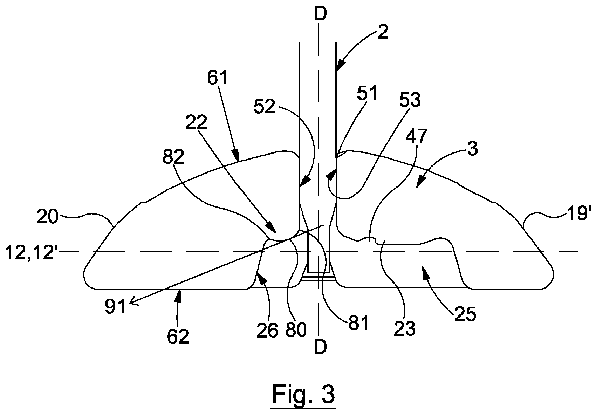

The base member 3 extends in a thickness direction from a first surface 61 to a second surface 62. In the orientation shown in figure 3, the first surface forms an upper surface and the second surface 62 forms a lower surface of the base member 3.

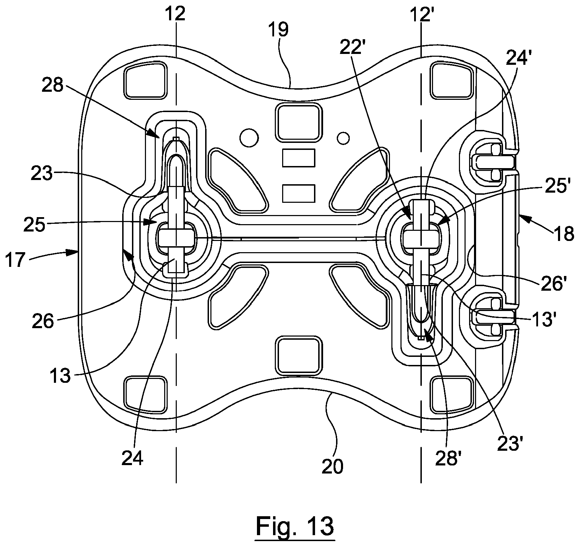

The base member 3 has first and second side surfaces 17, 18 that extend between the first and second surfaces 61, 62 and between front and rear sides 19, 20 of the base member 3 (see Figure 13).

The base member 3 is substantially symmetrical about a plane that bisects the length of the base member 3 (and is located substantially mid-way along the length of the base member 3) and is substantially perpendicular to the length direction of the base member 3. When the legs 8, 8' of the body member 2 are received by the slot 51 in the base member 3, said plane of the symmetry of the base 3 member is co-planar with said plane of symmetry Z of the body member 2.

The first and second side surfaces 17, 18 generally curve inwardly from the second surface 62 to the first surface 61. Similarly, the front and rear surfaces 19, 20 generally curve inwardly from the second surface 62 to the first surface 61

The front and rear surfaces 19, 20 form an undulating curve, in the length direction of the base member 3, having a concavely curved section that is symmetrical about the plane Z, and having first and second convexly curved sections extending from each end of the concavely curved section to the respective sides 17, 18 of the base member 3.

The first surface 61 is provided with an elongate slot 51 that extends along a longitudinal axis, in the length direction, substantially across the length of the first surface 61, but terminating inwardly of the first and second side surfaces 17, 18.

The elongate slot 51 extends from the first surface 61 towards the second surface 62.

The slot 51 is defined by opposed inner surfaces 52, 53 of the base member 3 that are substantially parallel to the thickness direction of the base member 3. Accordingly, the slot 51 extends along a longitudinal axis D that is substantially parallel to the thickness direction of the base member 3. In the orientation shown in figure 3, the opposed inner surfaces 52, 52', and the longitudinal axis D of the slot 51, are substantially vertical.

The slot 51 has first and second end sections 51', 51", defined by first and second end sections 52', 53' of the opposed inner surfaces 52, 53, that are located towards the first and second side surfaces 17, 18 of the base member 3 respectively (see Figure 1). The first and second end sections 51', 51" of the slot 51 open into respective recesses 25, 25' (see Figure 13) provided in the second surface 62 (as described in more detail below). The first and second end sections 51', 51", of the slot 51 are for receiving the first and second legs 8, 8' respectively.

Each of the first and second end sections 51', 51", of the slot 51 extend along a receiving axis D that is substantially perpendicular to axial direction of each locking bore 11, 11', when the legs 8, 8' are received within the end sections 51', 51" of the slot 51. Each of the first and second end sections 51', 51", of the slot 51 has a substantially rectangular cross-sectional shape about said axis D.

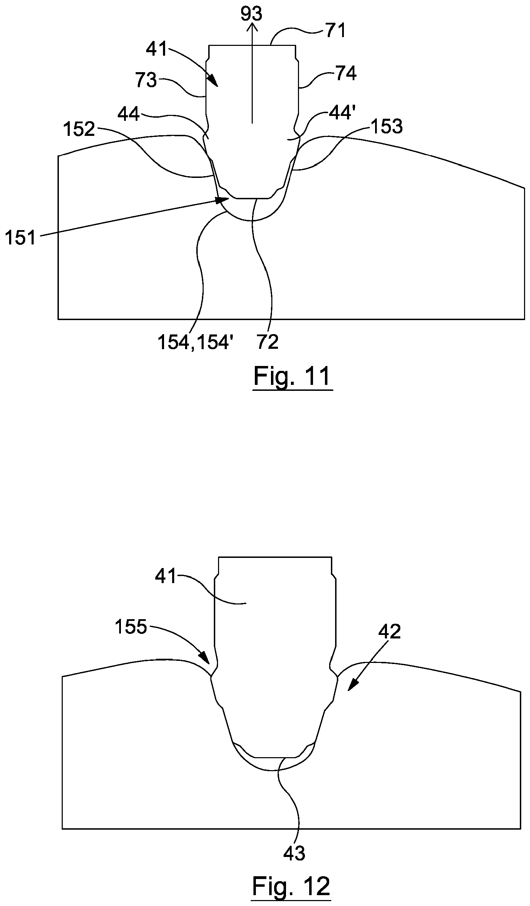

A middle section 151 of the slot 51, defined by middle sections 152, 153 of the opposed inner surfaces 52, 53, does not extend as far as the first and second ends 51, 51", of the slot 51, in the direction D (see Figures 11 and 12). The middle section 151 of the slot 51 extends from an open end 155, provided in the first surface 61 of the base member 3, to a concavely curved closed end 154 formed by a base section 154' of an inner surface of the base member 3. The base section 154' is concavely curved and has a U-shape about the longitudinal axis of the slot 51. Accordingly, the middle section 151 of the slot 51 defines a volume in the form of a channel.

As they extend from the open end 155 to the closed end 154, the middle sections 152, 153 approach each other such that the width of the middle section 151 of the slot 51 decreases. The middle section 151 of the slot 51 is for receiving a biasing member 41 of the body member 2 (see below).

The base member 3 has a weight and a footprint such that it holds the frame 4 in a substantially vertical position when the legs 8, 8' are received by the slot 51 (and when a locking member 13, 13' is in a locked position, as described in more detail below), without the need for the base member 3 to be fixed to a support surface, such as a floor on which the base member 3 rests.

In this regard, the base member 3 is made of a hollow thermoplastic moulding which is filled with a material, for example sand or water, to provide it with sufficient weight to form a stable base that supports the body member 3 in an upright position without the need for the base member 3 to be fixed to a support surface on which it is mounted (e.g. a floor).

It will be appreciated that, alternatively the base member 3 may be substantially solid and made of a suitably heavy material. For example, the base member 3 may be made of concrete. However, it will be appreciated that other materials may be used. In addition, it will be appreciated that the base member 3 may have any suitable shape to provide the required footprint to form a stable base to support the body member 2 in an upright position.

Referring to Figures 3 to 7, the first recess 25 in the base member 3 is defined by a section 26, of the second surface 62 of the base member 3 (see Figure 3) that extends towards the first surface 61. The recessed section 26 has generally circular cross-sectional shape about the receiving axis D of the first end section 51' of the slot 51, provided with a locking member insertion section 28 that extends, from the remainder of the recessed section 26, along a longitudinal axis that is coaxial with the longitudinal axis 12 of the locking bore 11, when the leg 8 is receiving within the first end section 51' of the slot 51. The locking member insertion section 28 extends towards the first surface 61 and is positioned to allow the locking pin 13 to be inserted into the locking bore 11, through the locking member insertion section 28 (as described in more detail below).

A part of the recessed section 26, of the second surface 62, is provided with an engagement formation 22. The engagement formation 22 is a portion of said recessed section 26 that is located within the width of the locking bore 11, when the first leg 8 is received within the first end section 51' of the slot 51. The engagement formation 22 is disposed on the same axial side as the end of the locking bore through which the second end 16 of the locking pin 13 passes out of as the locking pin 13 is moved to the attached position (see below).

The engagement formation 22 has a first engagement surface 80, that faces into the recess 25, and that extends generally in a first direction 91, inclined relative to the longitudinal axis 12 of the locking bore 11, when the first leg 8 is received within the first end section 51' of the slot 51. The first direction 91 is inclined at an oblique angle relative to the longitudinal axis 12 of the locking bore 11. The first direction 91 is a vector that is substantially contained within a plane defined by the longitudinal axis 12 of the locking bore 11, when the first leg 8 is received within the first end section 51' of the slot 51, and the receiving axis D. In this respect, said axes 12, D are substantially contained within said plane. However, it will be appreciated that the first direction 91 may not be contained within this plane and may be inclined relative to this plane.

The first engagement surface 80 extends into the path of the locking pin 13, as the second end 16 of the locking pin 13 passes out of the locking bore 11, as the locking pin 13 is moved to an attachment position (see below).

In this respect, the first engagement surface 80 extends from a first end 81, provided at the end of the inner surface 52 that is proximal to the surface 62, to a second end 82. As the first engagement surface 80 extends from its first end 81 to its second end 82, it extends both in a direction from the front surface 19 to the rear surface 20 of the base member 3 and from the first surface 61 to the second surface 62 of the base member 3. In the orientation shown in figure 3, the first engagement surface 80 extends, from its first end 81 to its second end 82, in a downward direction that is inclined relative to the longitudinal axis 12 of the bore 11.

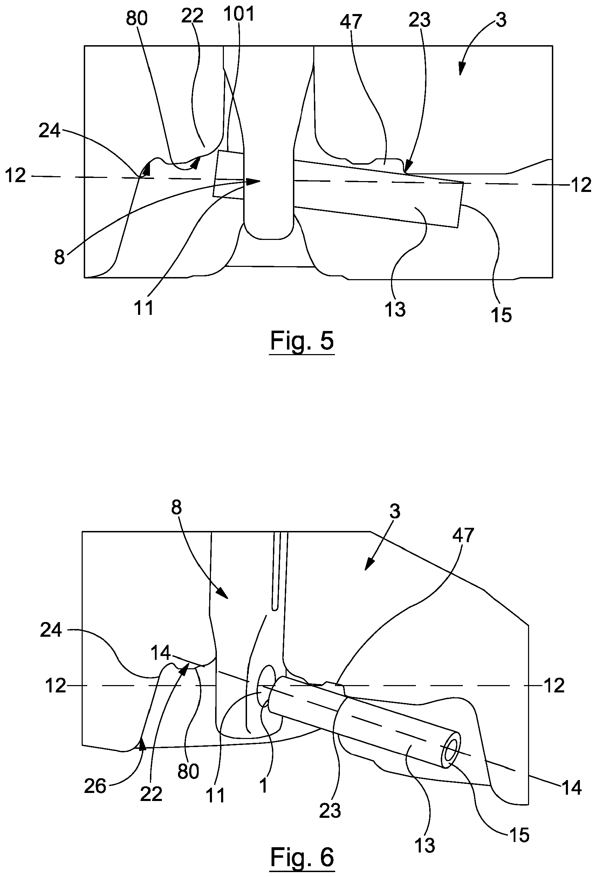

The locking pin 13 has a second engagement surface 101 (see Figure 5) formed by a longitudinally extending section, of a radially outer surface of the pin, towards the second end 16 of the pin 13.

The engagement formation 22 is arranged such that when the locking pin 13 is received within the locking bore 11 and travels along the locking bore 11 to an attachment position (see below), the first engagement surface 80 engages the second engagement surface 101 of the locking pin 13 (through abutting contact with the second engagement surface 101) and guides the locking pin 13 in the direction of the first engagement surface 80, from its first end 81 to its second end 82, i.e. in said first direction 91 inclined relative to the axial direction 12 of the bore 11.

The first engagement surface 80 is undulating along its length in said first direction 91.

A part of the recessed section 26, of the second surface 62, is provided with a first locking formation 23. The locking formation 23 is a portion of said recessed section 26 that is located within the width of the locking bore 11, when the first leg 8 is received within the first section 51' of the slot 51, on the opposite axial side of the locking bore 11 to the engagement formation 22.

The first locking formation 23 protrudes, from the remainder of said recessed section 26, in the direction from the first surface 61 to the second surface 62 of the base member 3, to form a lip. The first locking formation 23 partially extends across the diameter of the locking bore 11, when the first leg 8 is received within the first section 51' of the slot 51.

A part of the recessed section 26, of the second surface 62, is provided with a second locking formation 24. The second locking formation 24 is a portion of said recessed section 26 that is located within the width of the locking bore 11, when the first leg 8 is received within the first section 51' of the slot 51, on the same axial side of the locking bore 11 as the engagement formation 22, with the engagement formation 22 located between the second locking formation 24 and the locking bore 11.

The second locking formation 24 protrudes, from the remainder of said recessed section 26, in the direction from the first surface 61 to the second surface 62, across the diameter of the locking bore 11 in that direction.

The first and second locking formations 23, 24 are arranged such that when the locking pin 13 is in an attachment position (see below), the first and second locking formations 23, 24 limit movement of the locking pin 13 in first and second opposite directions in the direction of said bore axis 12, such that the locking pin 13 cannot be removed from the locking bore 11 by movement of the locking pin 13 said first or second axial directions 12. In this regard, each of the first and second locking formations 23, 24 extends into the path of the locking member 13, when it is received within the locking bore 11 and in an attachment position (see below) so as to prevent axial movement of the locking pin 13 past the locking member 23, 24.

A part of the recessed section 26, of the second surface 62, is provided with a recess 47. The recess 47 is provided in a portion of said recessed section 26 that is located within the width of the locking bore 11, when the first leg 8 is received within the first section 51' of the slot 51, on the same axial side of the locking bore 11 as the first locking formation 23, inboard of the first locking formation 23.

The recess 47 extends in the direction from the second surface 62 to the first surface 61 and extends partially in the axial direction 12 and extends across the width of the locking bore 11.

The recess is for receiving the first end 15 of the locking pin 13 when the locking pin 13 is in the attachment position (see below).

The bore 11 in the first leg 8, the engagement formation 22 (and the first engagement surface 80), the first and second locking members 23, 24 and the biasing member 41 form a first locking assembly.

The base and body assembly comprises a second said locking assembly, comprising the bore 11' in the second leg 8', a second engagement formation 22' (and a second first engagement surface 80), second first and second locking members 23', 24' and said biasing member 41. The second locking assembly is identical and structure and function as the first locking assembly (but provided on the other lateral side of the base and body assembly).

In this regard, the base member 3 comprises an identical recess 25', engagement formation 22' with a first engagement surface 80', first and second locking formations 23', 24' and recess 47' on the opposite side lengthwise side of the base member 3, although oriented in the opposite axial sense.

The structure and arrangement of the second locking assembly these features and their function, in relation to the second locking pin 13', is the same as that of the corresponding above described features in relation to the first locking pin 13 and so won't be described in any more detail.

Referring to Figures 2, 11 and 12, the body member 2 comprises a biasing member 41. The biasing member 41 extends, along a longitudinal axis, between surfaces of the first and second legs 8, 8' that are opposed in the length direction of the assembly 1. The biasing member 41 has a generally elongated U-shaped cross-sectional shape about its longitudinal axis. The biasing member 41 extends, in a thickness direction, from a first end 71, attached to a lower surface of the second frame member 5', to a second end 72. The second and 72 is convexly curved to form the base of the U-shaped cross-sectional shape. The biasing member 41 extends in a width direction from a front surface 73 to a rear surface 74.

Towards its second end 72, the biasing member 41 tapers such that its width decreases. The outer surface of the biasing member 41 has a generally undulating shape. The front and rear surfaces 73, 74 of the biasing member 41 are provided within first and second protrusions 44, 44' respectively, that each extend outwardly in the width direction. The first and second protrusions 44, 44' are substantially aligned in the thickness direction of the biasing member 41 and together define a maximum width of the biasing member 41.

The biasing member 41 is part of a thermoplastic moulding, the thermoplastic being chosen so as to be sufficiently resilient to deform sufficiently to urge the locking pin 13 in the second direction (see below) but without exceeding its elastic limit.

Alternatively, the biasing member 41 may be a solid block of resiliently deformable material, in the form of an elastically deformable material that substantially returns to its original shape when deformed.

The biasing member may be made of a resiliently deformable material, including a suitable elastomeric material, for example a thermoplastic elastomer, polyurethane or rubber.

The width of the biasing member 41 and of the middle section 151 of the slot 51 are arranged such that as the biasing member 41 is forced into the middle section 151 of the slot 51, due to the force exerted on the biasing member 141 as the locking pin 13 is moved to the attachment position (see below), the biasing member 41 is compressed and resiliently deformed (as described in more detail below).

Referring to Figures 1, 2, 4 to 7 and 11 to 12 there is shown as a sequential steps of attachment of the body member to the base member 3.

As shown in figures 1 and 2, in order to attach the body member 2 to the base member 3, the legs 8, 8' of the body member 3 are lowered, under the action of gravity, into the respective first and second sections 51', 51", of the slot 51 in the base member 3. As they are lowered into said first and second sections 51', 51", of the slot 51, the biasing member 41 is located in a first position (as shown in figure 11) in which a portion of the biasing member 41, towards its second end 72, is received within the middle section 151 of the slot 51.

Each locking pin 13, 13' is then inserted into the respective locking bore 11, 11' in the respective leg 8, 8' through the respective locking member insertion section 28, 28'. In this regard, each locking member insertion section 28, 28' of the recess 25 is positioned to allow the locking pin 13 to be inserted into the locking bore 11, through the locking member insertion section 28, 28'.

The steps in relation to the insertion of each locking pin 13, 13' into the respective bore 11, 11' and move of the pin 13, 13' to the attachment position are the same and therefore the steps will only be described for the first locking pin 13.

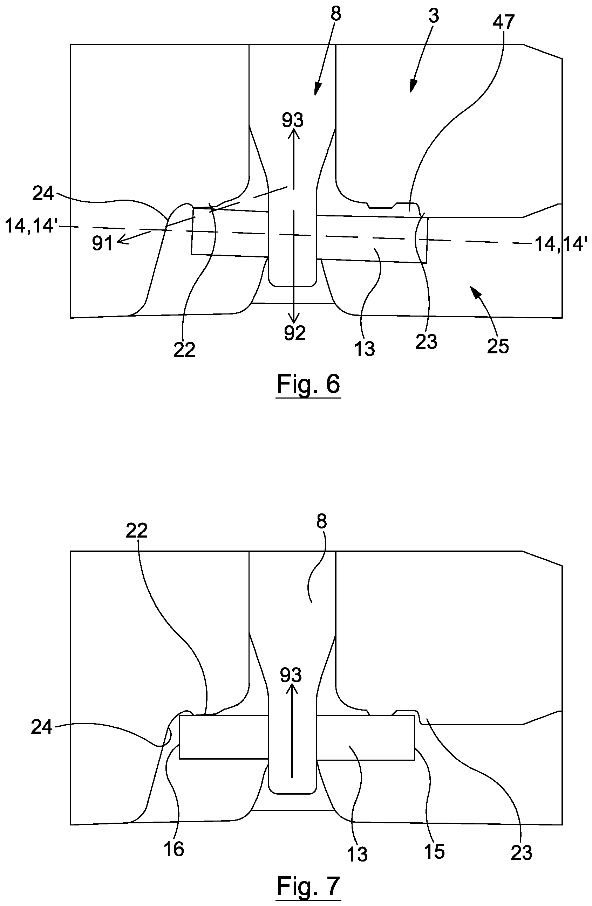

In this regard, once the leg 8 has been lowered through the slot 51, it's locking bore 11 is received within the first recess 25. Figures 4 to 7 show the sequential steps of the insertion of the locking pin 13, into the locking bore 11, through the bore 11 and into an attachment position (the attachment position is shown in Figure 7).

The second end 16 of the locking pin 13 is inserted into the end of the locking bore 11 that is distal to the engagement formation 22 (and is proximal to the first locking formation 23). As the second end 16 of the locking pin 13 passes out through the opposite axial end of the locking bore 11, through the bore 11, the second engagement surface 101 of the locking pin 13 abuts and slides against the first engagement surface 80 of the engagement formation 22, which guides the locking pin 13 in said first direction 91, inclined relative to the longitudinal axis 12 of the locking bore 11.

This forces the second end 16 of the locking pin 13 in said first direction 91 which, due to the locking pin 13 being received within the locking bore 11, forces the leg 8 in a direction 92 (see Figure 6) that is substantially perpendicular to the longitudinal axis 12 of the bore 11.

As the leg 8 is urged in the downwards direction 92 by the engagement of the second engagement surface 101 of the locking pin 13 with the first engagement surface 80 of the engagement formation 22, the biasing member 41 is also moved in the direction 92 (due to its connection to the leg 8). This moves the biasing member 41 further into the middle section 151 of the slot 51, from its first position (shown in Figure 11) to a second position (shown in Figure 12).

As it does so, the first and second protrusions 44, 44' of the biasing member 41 respectively abut the surfaces 152, 153 of the middle section 151 of the slot 51, which compresses the biasing member 41 inwardly.

In this way, the biasing member 41 forms an interference fit in the middle section 151 of the slot 51.

Furthermore, this compression deforms the biasing member 41 inwardly and, due to its resilience, the biasing member 41 then exerts an opposing force on the leg 8 in a second direction 93 that is substantially perpendicular to the longitudinal axis 12 of the locking bore 11 and is opposite to the direction 92.

Due to the locking pin 13 being received within the locking bore 11, this force is exerted on the locking pin 13, which urges a section of the locking pin 13, towards its first end 15, against the first locking formation 23, as it travels past the first locking formation 23.

Accordingly, as the first end 15 of the locking pin 13 passes inboard of the first locking formation 23, the force applied to the locking pin 13 by the biasing member 41 causes the locking pin 13 to automatically snap fit over the first locking formation 23 into the recess 47 into an attachment position, as shown in Figure 7.

When the locking pin 13 is in the attachment position, its first and second ends 15, 16 are disposed on opposite axial sides of the locking bore 11 to form a locking abutment with sections of the surface 26 on opposite axial sides of the locking bore 11 to substantially prevent the legs 8, 8' from being removed from the first and second sections 51', 51" of the slot 51 respectively.

The above arrangement is advantageous in that the locking pin 13 is automatically moved to the attachment position, by the biasing member 41, as it travels along the locking bore 11. This advantageously allows the locking member 13 to be moved to the attachment position simply by pushing the locking member 13 through the locking bore, thereby providing a simple assembly process and removes the need for any tooling to be applied to the locking member 13.

When the locking pin 13 is in the attachment position, it is disposed between the first and second locking formations 23, 24 such that it cannot be removed from the bore 11 by being moved in the either axial direction 12. In this regard, when the pin 13 is in the attachment position, the first end 15 of the pin 13 is disposed adjacent to and inboard of, the first locking formation 23 and the second end 16 of the pin 13 is disposed adjacent to and inboard of the second locking formation 24. Accordingly, the first and second locking formations 23, 24 limit the axial movement of the locking pin 13 in first and second opposite directions in the direction of the longitudinal axis 12. This prevents the pin 13 from being moved in either direction of the longitudinal axis 12 by a sufficient amount to remove the pin 13 from the bore 11. This advantageously automatically locks the locking pin 13 in the attachment position.

When the locking pin 13 is in its attachment position, the biasing member 41 urges the first and second ends 15, 16 of the locking pin 13 against said sections of the surface 26 on opposite axial sides of the locking bore 11.

This is advantageous in that, due to the force exerted by the biasing member 41, the body member 2 and base member 3 are held together securely when the locking pin 13 is in the attachment position. This prevents the body member 3 from moving relative to the base member 2 (e.g. rattling in the base), due to variations in dimensions due to manufacturing tolerances, for example.

In order to detach the body member 2 from the base member 3, the body member 2 may be pushed in the direction D, in the direction from the first surface 61 to the second surface 62, until the locking pins 13, 13' are moved to a position in which they can be moved axially past the first or second locking formations 23, 24. The pins 13, 14' are then moved axially past the first or second locking formations 23, 24 and the legs 8, 8' of the body member 2 are then removed from the first and second sections 51, 51' of the slot. The biasing member 41 is also removed from the middle section 151 of the slot 51. Accordingly, the body member 2 is then released from the base member 3.

It will be appreciated that a corresponding description, and corresponding advantages, applies in relation the second locking pin 13.

It will be appreciated that numerous modifications to the above described design may be made without departing from the scope of the invention as defined in the appended claims.

For example, in the described embodiment, the base and body assembly 1 comprises first and second said locking assemblies. Alternatively, the base and body assembly may comprise only a single said locking assembly, or may comprise more than two said locking assemblies.

In the described embodiment, the body member 2 comprises said first and second connecting sections, in the form of first and second legs 8, 8' and the base member 3 comprises the receiving section, in the form of said elongate slot 51. Alternatively, the base member 3 may comprise the connecting sections (the legs 8, 8') and the body member 2 may comprise the receiving section (the slot 51).

In the described embodiment the first engagement surface 80 extends in the first direction 91. Alternatively, or additionally, the second engagement surface 101 may extend in the first direction 91, when the locking pin 13 is received within the locking bore 12. In this case, the first engagement surface 80 may form a corner, such as substantially right-angled corner.

The first and/or second engagement surface may be straight, part-curved or substantially curved along its length in said first direction.

Where the second engagement surface extends in the first direction 91, the locking pin 13 may have a tapered section, towards its second end 16, where the surface of the locking pin that defines the taper forms the second engagement surface.

The body member 2 and/or the base member 3 may comprise one, or both, of the first engagement surfaces 80, 80' and/or one or each of the first and/or second locking formations 23, 23', 24, 24'. The recess 47 may be provided in a surface of the body member 2 and/or the base member 3.

A, or each locking assembly, may only comprise a single said locking formation 23, 23', 24, 24', i.e. a single said first or second locking formation 23, 23', 24, 24'.

In the described embodiment, the body member 2 comprises the biasing member 41 and the middle section 151 of the slot 51, that receives the biasing member 41, is provided in the base member 3. Alternatively, the base member 3 may comprise the biasing member 41, with the middle section 151 of the slot 51 provided in the body member 2.

In the described embodiment, the member 41 is resiliently deformable to form the biasing member. Alternatively, the middle sections 152, 153, of the opposed inner surfaces 52, 53 and the base section 154', that define the middle section 151 of the slot 51 may be resiliently deformable to form the biasing member. In this case, the member 41 may not be resiliently deformable, or may be less resiliently deformable than said surfaces 52, 53, 54.

In the described embodiment, the biasing member 41 is indirectly coupled to each locking pin 13, 13' through the respective legs 8, 8'. Alternatively, the biasing member 41 may be directly coupled to each locking pin 13, 13', for example by being directly attached to the locking pin 13, 13'.

Alternatively, or additionally, the first and/or second engagement surfaces 80, 101 may be resiliently deformable, so as to form a said biasing member. In this case, the first and/or second engagement surfaces 80, 101 may be arranged to urge the second end 15 of the locking pin 13 in the first direction 91, as the locking pin 13 travels through the locking bore 11 to the attachment position, to pivot the first end 15 of the locking pin 13 in the second direction, against the surface 26 of the base member 3 (or against a surface of the body member 2 if the engagement formation 22 is provided on the body member 2). In this regard, the member (e.g. the locking pin, base member or body member) that has the first or second engagement surface that is resiliently deformable may be made of a resiliently deformable material.

Alternatively, or additionally, a surface of each leg 8, 8' that defines the locking bores 11, 11' may be resiliently deformable, so as to form the biasing member.

In the described embodiment the biasing member 41 is formed by a thermoplastic moulding. Alternatively, the biasing member may be a spring, for example a coiled spring or leaf spring. The biasing member may be any suitable type of resiliently deformable member.

In the described embodiment each locking pin 13, 13' has a substantially circular cross-sectional shape about its longitudinal axis, such that it is a generally cylindrical. It will be appreciated that each locking pin 13, 13' may have any other suitable cross-sectional shape about its longitudinal axis, including a quadrilateral shape, a triangular shape, an oval shape, etc.

Each locking bore 11, 11' may have a cross-sectional shape, about its longitudinal axis, that corresponds to that of the locking pin 13, 13'.

In the described embodiment the body member 2 is in the form of a frame 4 for a sign. Alternatively, the body member 2 may form a, or part of a body of a, waste receptacle.

## Claims

1. A base and body assembly (1) comprising a base member, (3), a body member (2) and a locking member (13); one of the base member or the body member having a connecting section defining a locking bore (11), for receiving the locking member, the bore having a longitudinal axis extending in an axial direction, and the other of the base member or the body member having a receiving section (51) defining a volume for receiving the connecting section;
wherein when the connecting section is received by the receiving section, the locking member (11) is movable along the locking bore to an attachment position is which first and second ends of the locking member are disposed on opposite axial sides of the locking bore (11) to form a locking abutment with the other of the base member (3) and body member (2) to substantially prevent the connecting section being removed from the receiving section;
the base and/or body member having a first engagement surface (80) and the locking member having a second engagement surface (101) arranged such that when the locking member is received within the locking bore (11) and travels along the locking bore towards the attachment position, the first and second engagement surfaces engage with each other such that at least part of the locking member (13) is moved in a first direction inclined relative to the axial direction;
and wherein a biasing member (41) is coupled to the locking member such that the movement of the at least part of the locking member (13) in the first direction causes the biasing member (41) to urge at least a part of the locking member (13) in a second direction against said other of the base member and body member.

2. A base and body assembly according to claim 1 wherein the biasing member (41) is coupled to the locking member (13) such that when it is in the attachment position, the biasing member urges the locking member in the second direction against the other of the base member (3) and body member (2) and/orwherein when the locking member is in the attachment position, the biasing member urges first and second ends of the locking member against respective first and second surfaces of the receiving section, disposed on opposite axial sides of locking bore.

3. A base and body assembly according to any preceding claim wherein the first direction (91) is inclined at an oblique angle relative to the axial direction.

4. A base and body assembly according to any preceding claim wherein
the first engagement surface (80) and/or the second engagement surface (101) extend in the first direction; and/or
the first engagement surface (80) is disposed in the path of the locking member, as the locking member (13) passes through the locking bore (11); and/or
said other of the base member and the body member comprises the first engagement surface (80); and/or
the first engagement surface is formed on the same axial side as an end of the locking bore through which an end of the locking member (13) passes as it moves to the attachment position.

5. A base and body assembly according to any preceding claim wherein the base member and/or the body member comprises a locking formation (23) arranged such that as an end of the locking member passes the locking formation, the urging of the locking member in the second direction moves the locking member into the attachment position, in which the locking formation (23) limits movement of the locking member in a said axial direction such that the locking member cannot be removed from the locking bore by movement of the locking member in said axial direction; optionally wherein
the locking formation (23) and the first engagement surface (80) are disposed on opposite axial sides of the locking bore, when the connecting section is received by the receiving section; and/or
the base member and/or body member that comprises the locking formation defines a recess (47) adjacent to the locking formation, within which the end of the locking member is received when the locking member is in the attachment position.

6. A base and body assembly according to claim 5 wherein the locking formation forms a first locking formation and the base member and/or body member comprises a second locking formation, (24), wherein when the locking member is in the attachment position, the first and second locking formations limit movement of the locking member in first and second said axial directions such that the locking member cannot be removed from the locking bore by movement of the locking member in said first and second axial directions, optionally wherein the first and second locking formations are disposed on opposite axial sides of the locking bore, when the connecting section is received by the receiving section.

7. A base and body assembly according to any preceding claim wherein the biasing member (41) is indirectly coupled to the locking member, optionally wherein the locking bore (11) is dimensioned such that when the locking member (13) is received within the locking bore, movement of the locking member in the first and second directions moves the one of the base member and body member, that has the connecting section that defines the bore, in the first and second directions respectively, and vice-versa, and wherein the biasing member contacts said one of the base member and the body member when it is moved in the first direction to urge it in the second direction.

8. A base and body assembly according to any preceding claim wherein the biasing member (41) comprises a resiliently deformable member, optionally wherein
the biasing member is a thermoplastic moulding; and/or
the resiliently deformable member is elastically deformable; and/or
the biasing member comprises a block of resiliently deformable material.

9. A base and body assembly according to any preceding claim wherein the biasing member (41) is formed by one of the base member (3) and the body member (2) and the other is arranged to deform the biasing member as the locking member is moved to its attachment position, thereby producing a force on the locking member that urges it in the second direction.

10. A base and body assembly according to claim 9 wherein a surface of one of the base member (3) and body member (2) defines a volume for receiving a section of the other, as the locking member is moved in the first direction, wherein one of the base member and body member that defines the volume, or the section of the other, is resiliently deformable to form the biasing member, such that when the locking member is moved in the first direction, a surface of said section is forced against the surface that defines the volume, thereby deforming the biasing member to produce a force on the locking member that urges it in the second direction optionally wherein
the surface that defines the volume and said section are dimensioned so that they form an interference fit as said section is received within the volume; and/or
one of the surface that defines the volume and a surface of said section is uneven.

11. A base and body assembly according to any preceding claim wherein the first and/or second engagement surface (23,24) is resiliently deformable optionally wherein the first engagement surface is resiliently deformable and is arranged to urge a second end of the locking member (13) in the first direction, thereby pivoting a first end of the locking member in the second direction, against the other of the base member and body member, as the locking member is moved to its attachment position.

12. A base and body assembly according to any preceding claim wherein:
a surface of the connecting section that defines the locking bore is resiliently deformable, so as to form the biasing member; and/or
the base member or body member defines a recess (26) that is coaxial with the axis (12) of the locking bore (11) and is positioned to allow the locking member to be inserted into the locking bore, through the recess.

13. A base and body assembly according to any preceding claim wherein the connecting section, receiving section, first engagement surface, locking member and biasing member form a first locking assembly and the base and body assembly comprises a plurality of said locking assemblies optionally wherein the base and body assembly comprise first and second said locking assemblies, wherein the first and second locking assembles are spaced apart; and optionally wherein the volume defined by the surface of the one of the base member and body member, and said section, is elongate, extending between the first and second locking assemblies.

14. A base and body assembly according to any preceding claim wherein:
the base member (3) is weighted and has a footprint such that it holds the body member in an upwardly extending position, when the connecting section is received by the receiving section, without the need for the base member (3) to be fixed to a support surface; and/or
the body member (2) is a frame, or a part of a body of a waste receptacle; and/or
the base member (3) is substantially hollow and is filled with a material; and/or
the connecting section is received by the receiving section and the locking member (13) is in the attachment position.

15. A method of assembling a base and body assembly, comprising providing a base and body (3,2) assembly according to any of claims 1 to 14, receiving the connecting section in the receiving section, receiving the locking member (13) in the locking bore (11) and moving the locking member to the attachment position.

## Patentansprüche

1. Anordnung (1) aus Sockel und Körper, die ein Sockelelement, (3), ein Körperelement (2) und ein Verriegelungselement (13) umfasst;
wobei eines des Sockelelements oder des Körperelements einen Verbindungsbereich aufweist, der eine Verriegelungsbohrung (11) zum Aufnehmen des Verriegelungselements aufweist, wobei die Bohrung eine Längsachse aufweist, die sich in eine Axialrichtung erstreckt, und das andere des Sockelelements oder des Körperelements einen Aufnahmebereich (51) aufweist, der ein Volumen zum Aufnehmen des Verriegelungsbereichs definiert;
wobei, wenn der Verbindungsbereich vom Aufnahmebereich aufgenommen ist, das Verriegelungselement (11) entlang der Verriegelungsbohrung zu einer Befestigungsposition bewegbar ist, ist der ein erstes und ein zweites Ende des Verriegelungselements auf gegenüberliegenden axialen Seiten der Verriegelungsbohrung (11) angeordnet sind, um einen Verriegelungsanschlag mit dem anderen des Sockelelements (3) und des Körperelements (2) zu bilden, um im Wesentlichen zu verhindern, dass der Verbindungsbereich aus dem Aufnahmebereich entfernt wird; wobei das Sockel- und/oder das Körperelement eine erste Eingriffsfläche (80) aufweisen und das Verriegelungselement eine zweite Eingriffsfläche (101) aufweist, die derart angeordnet ist, dass, wenn das Verriegelungselement in die Verriegelungsbohrung (11) aufgenommen ist und entlang der Verriegelungsbohrung zur Befestigungsposition hin verschoben wird, die erste und die zweite Eingriffsfläche derart ineinander eingreifen, dass mindestens ein Teil des Verriegelungselements (13) in eine erste Richtung, die relativ zur Axialrichtung geneigt ist, bewegt wird;
und wobei ein Vorspannelement (41) derart an das Verriegelungselement gekoppelt ist, dass die Bewegung des mindestens einen Teils des Verriegelungselements (13) in die erste Richtung das Vorspannelement (41) veranlasst, mindestens einen Teil des Verriegelungselements (13) in eine zweite Richtung gegen das andere des Sockelelements und des Körperelements zu drängen.

2. Anordnung aus Sockel und Körper nach Anspruch 1, wobei das Vorspannelement (41) derart an das Verriegelungselement (13) gekoppelt ist, dass, wenn es sich in der Befestigungsposition befindet, das Vorspannelement das Verriegelungselement in die zweite Richtung gegen das andere des Sockelelements (3) und des Körperelements (2) drängt, und/oder
wobei, wenn sich das Verriegelungselement in der Befestigungsposition befindet, das Vorspannelement ein erstes und ein zweites Ende des Verriegelungselements gegen eine jeweilige erste und zweite Fläche des Aufnahmebereichs, die auf gegenüberliegenden axialen Seiten der Verriegelungsbohrung angeordnet sind, drängt.

3. Anordnung aus Sockel und Körper nach einem der vorhergehenden Ansprüche, wobei die erste Richtung (91) in einem schiefen Winkel relativ zur Axialrichtung geneigt ist.

4. Anordnung aus Sockel und Körper nach einem der vorhergehenden Ansprüche, wobei
sich die erste Eingriffsfläche (80) und/oder die zweite Eingriffsfläche (101) in die erste Richtung erstrecken und/oder
die erste Eingriffsfläche (80) im Pfad des Verriegelungselements angeordnet ist, wenn das Verriegelungselement (13) durch die Verriegelungsbohrung (11) geführt wird; und/oder
das andere des Sockelelements und des Körperelements die erste Eingriffsfläche (80) umfasst und/oder
die erste Eingriffsfläche auf derselben axialen Seite wie ein Ende der Verriegelungsbohrung, durch die ein Ende des Verriegelungselements (13) geführt wird, wenn es sich zur Befestigungsposition bewegt, gebildet ist.

5. Anordnung aus Sockel und Körper nach einem der vorhergehenden Ansprüche, wobei das Sockelelement und/oder das Körperelement eine Verriegelungsformation (23) umfasst, die derart platziert ist,
dass, wenn ein Ende des Verriegelungselements durch die Verriegelungsformation geführt wird, das Drängen des Verriegelungselements in die zweite Richtung das Verriegelungselement in die Befestigungsposition bewegt, in der die Verriegelungsformation (23) eine Bewegung des Verriegelungselements in die Axialrichtung derart begrenzt, dass das Verriegelungselement durch eine Bewegung des Verriegelungselements in die Axialrichtung nicht aus der Verriegelungsbohrung entfernt werden kann; wobei wahlweise
die Verriegelungsformation (23) und die erste Eingriffsfläche (80) auf gegenüberliegenden axialen Seiten der Verriegelungsbohrung angeordnet sind, wenn der Verbindungsbereich vom Aufnahmebereich aufgenommen ist; und/oder
das Sockelelement und/oder das Körperelement, das die Verriegelungsformation umfasst, eine Ausnehmung (47) neben der Verriegelungsformation definiert, in die das Ende des Verriegelungselements aufgenommen ist, wenn sich das Verriegelungselement in der Befestigungsposition befindet.

6. Anordnung aus Sockel und Körper nach Anspruch 5, wobei die Verriegelungsformation eine erste Verriegelungsformation bildet und das Sockelelement und/oder das Körperelement eine zweite Verriegelungsformation, (24), umfasst,
wobei, wenn sich das Verriegelungselement in der Befestigungsposition befindet, die erste und die zweite Verriegelungsformation eine Bewegung des Verriegelungselements in eine erste und eine zweite Axialrichtung begrenzen, derart, dass das Verriegelungselement durch eine Bewegung des Verriegelungselements in die erste und die zweite Axialrichtung nicht aus der Verriegelungsbohrung entfernt werden kann, wobei wahlweise die erste und die zweite Verriegelungsformation auf gegenüberliegenden axialen Seiten der Verriegelungsbohrung angeordnet sind, wenn der Verbindungsbereich vom Aufnahmebereich aufgenommen ist.

7. Anordnung aus Sockel und Körper nach einem der vorhergehenden Ansprüche, wobei das Vorspannelement (41) indirekt an das Verriegelungselement gekoppelt ist, wobei wahlweise die Verriegelungsbohrung (11) derart dimensioniert ist, dass, wenn das Verriegelungselement (13) in der Verriegelungsbohrung aufgenommen ist, eine Bewegung des Verriegelungselements in die erste und die zweite Richtung das eine des Sockelelements und des Körperelements, das den Verbindungsbereich, der die Bohrung definiert, aufweist, in die erste bzw. die zweite Richtung bewegt und umgekehrt, und wobei das Vorspannelement das eine des Sockelelements und des Körperelements berührt, wenn es in die erste Richtung bewegt wird, um es in die zweite Richtung zu drängen.

8. Anordnung aus Sockel und Körper nach einem der vorhergehenden Ansprüche, wobei das Vorspannelement (41) ein rückfedernd verformbares Element umfasst, wobei wahlweise
das Vorspannelement eine thermoplastische Form ist und/oder
das rückfedernd verformbare Element elastisch verformbar ist und/oder
das Vorspannelement einen Block aus rückfedernd verformbarem Material umfasst.

9. Anordnung aus Sockel und Körper nach einem der vorhergehenden Ansprüche, wobei das Vorspannelement (41) durch eines des Sockelelements (3) und des Körperelements (2) gebildet ist und das andere platziert ist, um das Vorspannelement zu verformen, wenn das Verriegelungselement in seine Befestigungsposition bewegt wird, wodurch eine Kraft auf dem Verriegelungselement produziert wird, die es in die zweite Richtung drängt.

10. Anordnung aus Sockel und Körper nach Anspruch 9, wobei eine Fläche eines des Sockelelements (3) und des Körperelements (2) ein Volumen zum Aufnehmen eines Bereichs des anderen definiert, wenn das Verriegelungselement in die erste Richtung bewegt wird, wobei eines des Sockelelements und des Körperelements, das das Volumen definiert, oder der Bereich des anderen rückfedernd verformbar ist, um das Vorspannelement derart zu bilden, dass, wenn das Verriegelungselement in die erste Richtung bewegt wird, eine Fläche des Bereichs gegen die Fläche, die das Volumen definiert, gedrängt wird, wodurch das Vorspannelement verformt wird, um eine Kraft auf dem Verriegelungselement zu produzieren, die es in die zweite Richtung drängt, wobei wahlweise
die Fläche, die das Volumen definiert, und der Bereich derart dimensioniert sind, dass sie eine Presspassung bilden, wenn der Bereich im Volumen aufgenommen ist; und/oder
eine der Fläche, die das Volumen definiert, und einer Fläche des Bereichs nicht eben ist.

11. Anordnung aus Sockel und Körper nach einem der vorhergehenden Ansprüche, wobei die erste und/oder die zweite Eingriffsfläche (23, 24) rückfedernd verformbar ist, wobei wahlweise die erste Eingriffsfläche rückfedernd verformbar ist und platziert ist, um ein zweites Ende des Verriegelungselements (13) in die erste Richtung zu drängen, wodurch ein erstes Ende des Verriegelungselements in die zweite Richtung gegen das andere des Sockelelements und des Körperelements geschwenkt wird, wenn das Verriegelungselement in seine Befestigungsposition bewegt wird.

12. Anordnung aus Sockel und Körper nach einem der vorhergehenden Ansprüche, wobei: eine Fläche des Verbindungsbereichs, die die Verriegelungsbohrung definiert, rückfedernd verformbar ist, um das Vorspannelement zu bilden; und/oder
das Sockelelement oder das Körperelement eine Ausnehmung (26) definiert, die koaxial zur Achse (12) der Verriegelungsbohrung (11) liegt und positioniert ist, um es zu erlauben, dass das Verriegelungselement durch die Ausnehmung in die Verriegelungsbohrung eingesetzt wird.

13. Anordnung aus Sockel und Körper nach einem der vorhergehenden Ansprüche, wobei der Verbindungsbereich, der Aufnahmebereich, die erste Eingriffsfläche, das Verriegelungselement und das Vorspannelement eine erste Verriegelungsanordnung bilden und die Anordnung aus Sockel und Körper eine Vielzahl von den Verriegelungsanordnungen umfasst, wobei wahlweise die Anordnung aus Sockel und Körper eine erste und eine zweite Verriegelungsanordnung umfassen, wobei die erste und die zweite Verriegelungsanordnung beabstandet sind, und wahlweise wobei das Volumen, das durch die Fläche des einen des Sockelelements und des Körperelements, und den Bereich definiert ist, länglich ist und sich zwischen der ersten und der zweiten Verriegelungsanordnung erstreckt.

14. Anordnung aus Sockel und Körper nach einem der vorhergehenden Ansprüche, wobei:
das Sockelelement (3) gewichtet ist und eine Stellfläche aufweist, derart, dass es das Körperelement in einer sich aufwärts erstreckenden Position hält, wenn der Verbindungsbereich vom Aufnahmebereich aufgenommen ist, ohne dass das Sockelelement (3) auf einer Stützfläche fixiert werden muss; und/oder
das Körperelement (2) ein Rahmen oder ein Teil eines Körpers eines Abfallbehälters ist und/oder
das Sockelelement (3) im Wesentlichen hohl und mit einem Material gefüllt ist und/oder
der Verbindungsbereich vom Aufnahmebereich aufgenommen wird und das Verriegelungselement (13) sich in der Befestigungsposition befindet.

15. Verfahren zum Montieren einer Anordnung aus Sockel und Körper, die das Bereitstellen einer Anordnung aus Sockel und Körper (3,2) nach einem der Ansprüche 1 bis 14, das Aufnehmen des Verbindungsbereichs im Aufnahmebereich, das Aufnehmen des Verriegelungselements (13) in der Verriegelungsbohrung (11) und das Bewegen des Verriegelungselements in die Befestigungsposition umfasst.

## Revendications

1. Ensemble base et corps (1), comprenant un organe formant base (3), un organe formant corps (2) et un organe de verrouillage (13) ;
un parmi l'organe formant base ou l'organe formant corps présentant une section de raccordement définissant un alésage de verrouillage (11), afin d'accueillir l'organe de verrouillage, et l'alésage présentant un axe longitudinal s'étendant dans une direction axiale, et l'autre parmi l'organe formant base ou l'organe formant corps présentant une section d'accueil (51) définissant un volume permettant d'accueillir la section de raccordement ;
dans lequel, lorsque la section de raccordement est accueillie par la section d'accueil, l'organe de verrouillage (11) est mobile le long de l'alésage de verrouillage vers une position de fixation au sein de laquelle des première et deuxième extrémités de l'organe de verrouillage sont fournies sur des côtés axiaux opposés de l'alésage de verrouillage (11) afin de former une butée de verrouillage avec l'autre parmi l'organe formant base (3) et l'organe formant corps (2) afin d'empêcher essentiellement le retrait de la section de raccordement hors de la section d'accueil ;
l'organe formant base et/ou corps présentant une première surface de mise en prise (80) et l'organe de verrouillage présentant une deuxième surface de mise en prise (101) agencée de sorte que, lorsque l'organe de verrouillage est accueilli au sein de l'alésage de verrouillage (11) et se déplace le long de l'alésage de verrouillage en direction de la position de fixation, les première et deuxième surfaces de mise en prise viennent en prise l'une avec l'autre de sorte qu'au moins une partie de l'organe de verrouillage (13) est déplacée dans une première direction de manière inclinée par rapport à la direction axiale ;
et dans lequel un organe de poussée (41) est couplé à l'organe de verrouillage de sorte que le déplacement de la au moins une partie de l'organe de verrouillage (13) dans la première direction provoque la sollicitation, par l'organe de poussée (41), d'au moins une partie de l'organe de verrouillage (13) dans une deuxième direction à l'encontre dudit autre parmi l'organe formant base et l'organe formant corps.

2. Ensemble base et corps selon la revendication 1, dans lequel l'organe de poussée (41) est couplé à l'organe de verrouillage (13) de sorte que, lorsqu'il se trouve dans la position de fixation, l'organe de poussée sollicite l'organe de verrouillage dans la deuxième direction à l'encontre de l'autre parmi l'organe formant base (3) et l'organe formant corps (2) et/ou dans lequel, lorsque l'organe de verrouillage se trouve dans la position de fixation, l'organe de poussée sollicite des première et deuxième extrémités de l'organe de verrouillage à l'encontre de première et deuxième surfaces respectives de la section d'accueil, fournies sur des côtés axiaux opposés de l'alésage de verrouillage.

3. Ensemble base et corps selon l'une quelconque des revendications précédentes, dans lequel la première direction (91) est inclinée avec un angle oblique par rapport à la direction axiale.

4. Ensemble base et corps selon l'une quelconque des revendications précédentes, dans lequel
la première surface de mise en prise (80) et/ou la deuxième surface de mise en prise (101) s'étendent dans la première direction ; et/ou
la première surface de mise en prise (80) est fournie sur le trajet de l'organe de verrouillage, lorsque l'organe de verrouillage (13) traverse l'alésage de verrouillage (11) ; et/ou
ledit autre parmi l'organe formant base et l'organe formant corps comprend la première surface de mise en prise (80) ; et/ou
la première surface de mise en prise est formée du même côté axial qu'une extrémité de l'alésage de verrouillage à travers lequel passe une extrémité de l'organe de verrouillage (13) lorsqu'il se déplace vers la position de fixation.

5. Ensemble base et corps selon l'une quelconque des revendications précédentes, dans lequel l'organe formant base et/ou l'organe formant corps comprend une formation de verrouillage (23) agencée de telle manière que, lorsqu'une extrémité de l'organe de verrouillage traverse la formation de verrouillage, la sollicitation de l'organe de verrouillage dans la deuxième direction déplace l'organe de verrouillage jusque dans la position de fixation au sein de laquelle la formation de verrouillage (23) limite un déplacement de l'organe de verrouillage dans ladite direction axiale de sorte que l'organe de verrouillage ne peut pas être retiré de l'alésage de verrouillage grâce à un déplacement de l'organe de verrouillage dans ladite direction axiale ; éventuellement dans lequel
la formation de verrouillage (23) et la première surface de mise en prise (80) sont fournies sur des côtés axiaux opposés de l'alésage de verrouillage, lorsque la section de raccordement est accueillie par la section d'accueil ; et/ou
l'organe formant base et/ou l'organe formant corps qui comprend la formation de verrouillage définit un renfoncement (47), à proximité adjacente de la formation de verrouillage, au sein duquel l'extrémité de l'organe de verrouillage est accueillie lorsque l'organe de verrouillage se trouve dans la position de fixation.

6. Ensemble base et corps selon la revendication 5, dans lequel la formation de verrouillage forme une première formation de verrouillage et l'organe formant base et/ou l'organe formant corps comprend une deuxième formation de verrouillage (24),
dans lequel, lorsque l'organe de verrouillage se trouve dans la position de fixation, les première et deuxième formations de verrouillage limitent un déplacement de l'organe de verrouillage dans des première et deuxième dites directions axiales de sorte que l'organe de verrouillage ne peut pas être retiré de l'alésage de verrouillage grâce à un déplacement de l'organe de verrouillage dans lesdites première et deuxième directions axiales, éventuellement dans lequel les première et deuxième formations de verrouillage sont fournies sur des côtés axiaux opposés de l'alésage de verrouillage, lorsque la section de raccordement est accueillie par la section d'accueil.

7. Ensemble base et corps selon l'une quelconque des revendications précédentes, dans lequel l'organe de poussée (41) est couplé indirectement à l'organe de verrouillage, éventuellement dans lequel l'alésage de verrouillage (11) est dimensionné de telle manière que, lorsque l'organe de verrouillage (13) est accueilli au sein de l'alésage de verrouillage, un déplacement de l'organe de verrouillage dans les première et deuxième directions déplace l'un parmi l'organe formant base et l'organe formant corps, lequel présente la section de raccordement qui définit l'alésage, respectivement dans les première et deuxième directions, et inversement, et dans lequel l'organe de poussée vient en contact avec ledit un parmi l'organe formant base et l'organe formant corps lorsqu'il est déplacé dans la première direction afin de le solliciter dans la deuxième direction.

8. Ensemble base et corps selon l'une quelconque des revendications précédentes, dans lequel l'organe de poussée (41) comprend un organe pouvant être déformé de manière résiliente, éventuellement dans lequel
l'organe de poussée est un moulage thermoplastique ; et/ou
l'organe pouvant être déformé de manière résiliente peut être déformé de manière élastique ; et/ou
l'organe de poussée comprend un bloc de matériau pouvant être déformé de manière résiliente.

9. Ensemble base et corps selon l'une quelconque des revendications précédentes, dans lequel l'organe de poussée (41) est formé d'un parmi l'organe formant base (3) et l'organe formant corps (2) et l'autre parmi ceux-ci est agencé de manière à déformer l'organe de poussée lorsque l'organe de verrouillage est déplacé vers sa position de fixation, ce qui exerce sur l'organe de verrouillage une force qui le sollicite dans la deuxième direction.

10. Ensemble base et corps selon la revendication 9, dans lequel une surface d'un parmi l'organe formant base (3) et l'organe formant corps (2) définit un volume permettant d'accueillir une section de l'autre parmi ceux-ci, lorsque l'organe de verrouillage est déplacé dans la première direction, dans lequel un parmi l'organe formant base et l'organe formant corps qui définit le volume, ou la section de l'autre parmi ceux-ci, peut être déformé de manière résiliente afin de former l'organe de poussée, de sorte que, lorsque l'organe de verrouillage est déplacé dans la première direction, une surface de ladite section est forcée contre la surface qui définit le volume, ce qui déforme l'organe de poussée de manière à exercer sur l'organe de verrouillage une force qui le sollicite dans la deuxième direction, éventuellement dans lequel
la surface qui définit le volume et ladite section sont dimensionnées de sorte qu'elles forment un ajustement par interférence lorsque ladite section est accueillie au sein du volume ; et/ou
une parmi la surface qui définit le volume et une surface de ladite section est irrégulière.

11. Ensemble base et corps selon l'une quelconque des revendications précédentes, dans lequel la première et/ou deuxième surface de mise en prise (23, 24) peut/peuvent être déformée(s) de manière résiliente, éventuellement dans lequel la première surface de mise en prise peut être déformée de manière résiliente et est agencée de manière à solliciter une deuxième extrémité de l'organe de verrouillage (13) dans la première direction, ce qui fait pivoter une première extrémité de l'organe de verrouillage dans la deuxième direction, à l'encontre de l'autre parmi l'organe formant base et l'organe formant corps, lorsque l'organe de verrouillage est déplacé vers sa position de fixation.

12. Ensemble base et corps selon l'une quelconque des revendications précédentes, dans lequel :
une surface de la section de raccordement qui définit l'alésage de verrouillage peut être déformée de manière résiliente, de manière à former l'organe de poussée ; et/ou
l'organe formant base ou l'organe formant corps définit un renfoncement (26) qui est coaxial avec l'axe (12) de l'alésage de verrouillage (11) et est positionné de manière à permettre l'insertion de l'organe de verrouillage dans l'alésage de verrouillage, à travers le renfoncement.

13. Ensemble base et corps selon l'une quelconque des revendications précédentes, dans lequel la section de raccordement, la section d'accueil, la première surface de mise en prise, l'organe de verrouillage et l'organe de poussée forment un premier ensemble de verrouillage et l'ensemble base et corps comprend une pluralité desdits ensembles de verrouillage, éventuellement dans lequel l'ensemble base et corps comprend des premier et deuxième dits ensembles de verrouillage, dans lequel les premier et deuxième ensembles de verrouillage sont espacés ; et éventuellement dans lequel le volume défini par la surface de l'un parmi l'organe formant base et l'organe formant corps, et ladite section, est allongé et s'étend entre les premier et deuxième ensembles de verrouillage.

14. Ensemble base et corps selon l'une quelconque des revendications précédentes, dans lequel :
l'organe formant base (3) est lesté et présente une surface de contact avec le sol telle qu'elle permet de maintenir l'organe formant corps dans une position d'extension vers le haut, lorsque la section de raccordement est accueillie par la section d'accueil, sans qu'il soit nécessaire que l'organe formant base (3) soit fixé sur une surface de support ; et/ou
l'organe formant corps (2) est un châssis, ou une partie d'un corps d'un réceptacle à déchets ; et/ou
l'organe formant base (3) est essentiellement creux et est rempli d'un matériau ; et/ou
la section de raccordement est accueillie par la section d'accueil et l'organe de verrouillage (13) se trouve dans la position de fixation.

15. Procédé d'assemblage d'un ensemble base et corps, comprenant les étapes consistant à fournir un ensemble base et corps (3, 2) selon l'une quelconque des revendications 1 à 4, accueillir la section de raccordement dans la section d'accueil, accueillir l'organe de verrouillage (13) dans l'alésage de verrouillage (11), et déplacer l'organe de verrouillage vers la position de fixation.
